# EUROPEAN PATENT APPLICATION

(11) **EP 4 450 183 A1**
(43) Date of publication of application: **23.10.2024**
(21) Application number: 22907261.6
(22) Date of filing: 05.12.2022
(51) Int. Cl.: B22C 1/02

(54) **SURFACTANT COMPOSITION FOR FOAM SAND**

(30) Priority: 17.12.2021 JP 2021204750
(71) Applicant: NOF Corporation, Shibuya-ku Tokyo 150-6019 (JP); TOYOTA JIDOSHA KABUSHIKI KAISHA, Toyota-shi Aichi 471-8571 (JP)
(72) Inventor: WATANABE Hirotsune, Toyota-shi Aichi 471-8571 (JP); HORI Shoko, Toyota-shi Aichi 471-8571 (JP); EZUKA Hiroki, Amagasaki-shi Hyogo 660-0095 (JP); HABARA Nanae, Amagasaki-shi Hyogo 660-0095 (JP); FUJITA Hiroya, Amagasaki-shi Hyogo 660-0095 (JP)
(74) Representative: TBK
(86) International application number: PCT/JP2022/044656
(87) International publication number: WO 2023/112733

(57) **Abstract**

(Object) It is to provide a surfactant composition for foamed sand having excellent rapid-foaming property of the foamed sand and improved strength of a mold when the mold such as a sand core or the like is produced by applying the foamed sand.

(Solution) A surfactant composition for a formed sand, said surfactant composition comprises a compound (A) represented by the following formula (1) and a compound (B) represented by the following formula (2). The content of the compound (A) is 25 to 85 mass% and content of the compound (B) is 15 to 75 mass%, provided that a total mass of the compound (A) and compound (B) is defined as 100 mass%.

R¹O-(EO)ₐ-SO₃M¹··· (1)

(R¹ represents a hydrocarbon group having 6 to 22 carbon atoms, EO represents oxyethylene group, a is 1 to 10, and M¹ represents an alkali metal, alkaline earth metal, ammonium or an organic ammonium.)

R²CONR³C₂H₄SO₃M²··· (2)

(R²CO represents a fatty acyl group having 6 to 22 carbon atoms, R³ represents hydrogen atom or an alkyl group having 1 to 3 carbon atoms, and M² represents an alkali metal, an alkaline earth metal, ammonium or an organic ammonium.)

## Description

### Technical field

The present invention is related to a surfactant composition for foamed sand which is excellent in rapid-foaming property of the foamed sand and capable of improving the strength of a mold in producing the mold such as a sand core or the like including the foamed sand.

### BACKGROUND ARTS

Patent document 1 is known as a prior technique relating to a cast molding apparatus. According to patent document 1, it is disclosed a cast molding apparatus of casting a mold, and a metal mold apparatus used therefor, by agitating a particulate bone material, water-soluble binder and water to obtain foamed mixture and by filling the foamed mixture under pressure into a cavity of a heated metal mold. It is thereby possible to utilize the foamed mixture effectively to provide a cast molding apparatus capable of sufficiently assuring the filling of flowing sand into the metal mold cavity and to provide the apparatus capable of considerably shortening the hardening time of the foamed mixture.

### (Prior technical documents)

### (Patent documents)

(Patent document 1) WO 2005/089984 A1

### SUMMARY OF THE INVENTION

### (Objects to be solved by the Invention)

According to the method described in patent document 1, as it is required that the water-soluble binder has foaming property as well as essential binding performance for improving the foaming and flowing state of the foamed mixture, a surfactant composition is added thereto. It is demanded, as the surfactant, the surfactant composition for foamed sand excellent in rapid-foaming property of the foamed sand and of improving the strength of a mold.

An object of the present invention is, when a mold such as a sand core or the like including foamed sand is produced, to provide a surfactant composition for the foamed sand having excellent rapid-foaming property of the formed sand and capable of improving the strength of the mold.

### (Solution for the object)

As the inventors extensively researched for solving the above objects, it is found that a surfactant composition for foamed sand has excellent rapid-foaming property of the foamed sand and the effect of improving the strength of the mold, in the case that the composition contains specific amounts of a specific polyoxyethylene alkyl ether sulfate ester salt, a specific acyl taurine salt and a specific polyalkylene glycol derivative, and the present invention is completed.

That is, the present invention is as follows.
(1) A surfactant composition for a formed sand, said surfactant composition comprising a compound (A) represented by the following formula (1) and a compound (B) represented by the following formula (2),
   wherein a content of said compound (A) is 25 to 85 mass% and a content of said compound (B) is 15 to 75 mass%, provided that a total mass of said compound (A) and said compound (B) is defined as 100 mass%.

      R¹O-(EO)ₐ-SO₃M¹··· (1)

      (in the formula (1),
   R¹ represents a hydrocarbon group having 6 to 22 carbon atoms,
   EO represents oxyethylene group,
   a represents an average molar number of addition of said oxyethylene group and 1 to 10, and
   M¹ represents an alkali metal, alkaline earth metal, ammonium or an organic ammonium.)

      R²CONR³C₂H₄SO₃M²··· (2)

      (in the formula (2),
   R²CO represents a fatty acyl group having 6 to 22 carbon atoms,
   R³ represents hydrogen atom or an alkyl group having 1 to 3 carbon atoms, and
   M² represents an alkali metal, an alkaline earth metal, ammonium or an organic ammonium.)
(2) The surfactant composition for a formed sand of (1), said surfactant composition further comprising a compound (C) represented by the following formula (3), wherein a content of said compound (C) is 1 to 20 mass parts provided that a total mass of said compound (A) and said compound (B) is defined as 100 mass parts.

   R⁴O-(AO)_{b}-H··· (3)

   (in the formula (3),
   R⁴ represents hydrogen atom or a hydrocarbon group having 1 to 5 carbon atoms,
   AO represents an oxyalkylene group having 2 or more and 3 or less carbon atoms, and
   b represents an average molar number of addition of said oxyalkylene group and 2 to 100.)

### (Effects of the Invention)

According to the surfactant composition for the foamed sand of the present invention, the binder, sand, surfactant composition, water etc. can be sufficiently foamed only by kneading for a short time, and a mold with a high strength can be produced.

### BRIEF DESCRIPTION OF THE DRAWINGS

Fig. 1 is a diagram schematically showing method of measuring a kinematic viscosity.
Fig. 2 is a diagram schematically showing the state that a test piece is set in a machine for testing a flexural strength for a mold and that the flexural strength of the test piece is measured.

### MODES FOR CARRYING OUT THE INVENTION

The surfactant composition for the foamed sand of the present invention contains the component (A), component (B) and component (C). Further, the total of the respective mass ratios of the compound (A) and compound (B) is defined as 100 mass%. The respective components are described below.

Further, the numerical range represented by "1 to 10" includes numerals at the upper and lower limits and means 1 or higher and 10 or lower.

### (Component (A))

The component (A) used in the present invention is the polyoxyethylene alkyl ether sulfate ester salt of the following formula (1).

R¹O-(EO)ₐ-SO₃M¹··· (1)

In the polyoxyethylene alkyl ether sulfate ester salt represented by the formula (1), R¹ represents a hydrocarbon group having 6 to 22 carbons, and may preferably be a hydrocarbon group having 6 to 20 carbons. The hydrocarbon group may be a saturated hydrocarbon group or a hydrocarbon group having a carbon-carbon double bond (particularly preferably alkenyl group). In the case that the hydrocarbon group is the unsaturated hydrocarbon group having the carbon-carbon double bond, the number of the double bonds may preferably be 3 or lower and more preferably be 2 or lower. For example, such hydrocarbon group may be caprylic group, capric group, lauryl group, myristyl group, palmityl group, stearyl group, oleyl group, behenyl group or the like. Further, hydrocarbon groups derived from mixed fatty acids containing two or more kinds of hydrocarbon groups may be used and, for example, hydrocarbon groups of coconut oil or hydrocarbon groups of palm kernel oil may be used. Among them, lauryl group, myristyl group, hydrocarbon groups of coconut oil and hydrocarbon groups of palm kernel oil are preferred, and mixture of lauryl group and myristyl group is more preferably contained.

In the formula (1), a represents an average molar number of addition of the oxyethylene group, and a is 1 to 10, preferably 2 to 6 and more preferably 3 to 4.

In the formula (1), M¹ represents an alkali metal, an alkaline earth metal, ammonium or an organic ammonium. The alkali metal may be lithium, sodium, potassium or the like, and preferably sodium. The alkaline earth metal may be calcium, strontium, barium or the like, and preferably calcium. Ammonium is represented by NH₄⁺.

The organic ammonium may be, for example, an alkanol ammonium derived from an alkanol amine such as monoethanol amine, diethanol amine, triethanol amine or the like, and an alkyl ammonium derived from an alkyl amine such as diethyl amine, triethyl amine or the like.

According to the present invention, one kind or two kinds or more of the components (A) may be appropriately selected and utilized.

Further, the content of the component (A) is 25 to 85 mass%, provided that 100 mass% is assigned to a total amount of the component (A) and component (B). As the strength of the rapid-foaming property is reduced in the case that the content of the component (A) is lower than 25 mass%, the content is thus made 25 mass% or higher, preferably 30 mass% or higher and more preferably 35 mass% or higher. Further, as the strength of the mold tends to be deteriorated in the case that the content of the component (A) exceeds 85 mass%, the content is made 85 mass% or lower, is preferably 75 mass% or lower and more preferably 70 mass% or lower.

### (Component (B))

The component (B) applied in the present invention is an acyl taurine salt represented by the following formula (2).

R²CONR³C₂H₄SO₃M²··· (2)

In the acyl taurine salt represented by the formula (2), R²CO represents a fatty acyl group having 6 to 22 carbon atoms, and is preferably a fatty acyl group having 10 to 18 carbon atoms. Such fatty acyl group may be, for example, capryloyl group, caprinoyl group, lauroyl group, myristoyl group, palmitoyl group, stearoyl group, behenoyl group, or the mixtures thereof such as residual group of coconut oil fatty acid, residual group of palm oil fatty acid, residual group of palm kernel oil fatty acid, residual group of beef tallow fatty acid, residual group of cured beef tallow fatty acid or the like.

In the formula (2), R³ represents hydrogen atom or an alkyl group having 1 to 3 carbon atoms. The alkyl group having 1 to 3 carbon atoms may be methyl group, ethyl group, propyl group or isopropyl group. Hydrogen atom, methyl group and ethyl group are preferred.

They can be obtained by the following method, for example. Sodium salt of acyl methyl taurine is obtained by the acylation of sodium methyl taurine by a fatty acid chloride under the presence of sodium hydroxide.

In the formula (2), M² represents an alkali metal, an alkaline earth metal, ammonium or an organic ammonium. The alkali metal may be lithium, sodium, potassium or the like, and preferably sodium. The alkaline earth metal may be magnesium, strontium, barium or the like, and preferably magnesium. The organic ammonium may be, for example, an alkanol ammonium derived from an alkanol amine such as monoethanol amine, diethanol amine, triethanol amine or the like, and an alkyl ammonium derived from an alkyl amine such as diethyl amine, triethyl amine or the like.

According to the present invention, one kind or two kinds or more of the components (B) may be appropriately selected and utilized.

Further, provided that a total mass of the compound (A) and compound (B) is defined as 100 mass%, the content of the component (B) is 15 to 75 mass%. As the rapid-foaming property is deteriorated in the case that the content of the component (B) is less than 15 mass%, the content is thus made 15 mass% or higher and may more preferably be 20 mass% or higher. Further, as the strength of the mold may be lowered in the case that the content of the component (B) exceeds 75 mass%, the content is made 75 mass% or lower, may preferably be 65 mass% or lower and more preferably be 60 mass% or lower.

### (Component (C))

The component (C) applied in the present invention is the polyalkylene glycol derivative represented by the following formula (3).

R⁴O-(AO)_{b}-H··· (3)

In the formula (3), R⁴ represents hydrogen atom or an alkyl group having 1 to 5 carbon atoms. The alkyl group having 1 to 5 carbon atoms may be methyl group, ethyl group, propyl group, isopropyl group, butyl group, isobutyl group, hexyl group, isohexyl group or the like. It may preferably be hydrogen atom, methyl group or butyl group.

In the formula (3), AO represents an oxyalkylene group having 2 to 3 carbon atoms. The oxyalkylene group having 2 to 3 carbon atoms may be oxyethylene group, oxypropylene group or the like. Further, AO may be composed of oxyethylene group only, may be composed of oxypropylene group only, or may contain both of oxyethylene group and oxypropylene group. In the case that both are contained, it is preferred that 40 mol% or higher is occupied by oxyethylene group as to the ratios of oxyethylene group and oxypropylene group, and the mode of addition may be block-mode or random-mode.

In the formula (3), b represents a molar number of addition of oxyalkylene having 2 to 3 carbon atoms is 2 to 100, is preferably 10 to 80 and is more preferably 30 to 60.

According to the present invention, one kind or two or more kinds of the component (C) may be appropriately selected and applied.

Further, the content of the component (C) may preferably be 1 to 20 mass parts, provided that the total mass of the compound (A) and compound (B) is defined as 100 mass parts. As the strength of the mold is lowered in the case that the content of the component (C) is lower than 1 mass part, the content is made 1 mass part or higher, may preferably be 3 mass parts or higher and may more preferably be 5 mass parts or higher. Further, as the rapid-foaming property may be possibly deteriorated in the case that the content of the component (C) exceeds 20 mass parts, the content is made 20 mass parts or lower, may preferably be 18 mass parts or lower and may more preferably be 15 mass parts or lower.

The weight average molecular weight of the component (C) may preferably be 100 to 5000, more preferably be 500 to 4500 and most preferably be 1000 to 4000. The strength of the mold may possibly be lowered in the case that the molecular weight is lower than 100. Further, the rapid-foaming property may possible be deteriorated in the case that the molecular weight exceeds 5000.

The surfactant composition for foamed sand of the present invention may contain an additive in addition to the components described above, as far as the effects of the present invention is not inhibited. For example, surfactants other than the component (A), component (B) and component (C), organic or inorganic salts, pH adjusting agents, fungicides, thickening agents, chelating agents, pigments, perfumes or the like are listed.

### EXAMPLES

### (Inventive Examples 1 to 11 and Comparative Examples 1 to 6)

The present invention will be specifically described below, referring to the inventive examples and comparative examples.

The respective raw materials of the inventive examples 1 to 11 and comparative examples 1 to 6 shown in tables 4 and 5 were charged into a beaker, and then agitated at 50°C for 1 hour by means of a magnetic stirrer to prepare the surfactant compositions for foamed sand. "-" in the tables means that it is not contained.

Further, the symbols etc. in the formula (1) of the respective components A1 and A2 shown in tables 4 and 5 are described in table 1, the symbols etc. in the formula (2) of components B1 and B2 shown in tables 4 and 5 are described in table 2, and the physical properties of the respective components C1 and C2 shown in tables 4 and 5 are described in table 3.

The following tests were performed for the thus obtained respective surfactant compositions for foamed sand. The evaluations of "○○" and "○" were categorized as "passed" in each of the tests.

### (1) Rapid-foaming property

### Procedure 1

Artificial sand is prepared as articulate bone material, water glass and the surfactant for the evaluation are prepared as water soluble binders, and water is prepared. The materials were charged into a kneading system in weight ratios of 100 of the artificial sand, 0.5 to 2.5 of the solid content of the water glass, 0.01 to 0.05 of the effective ingredient of the surfactant and 2 to 4 of water.

### Procedure 2

The materials described above are kneaded by means of the kneading system for 90 seconds to obtain foamed mixture.

### Procedure 3

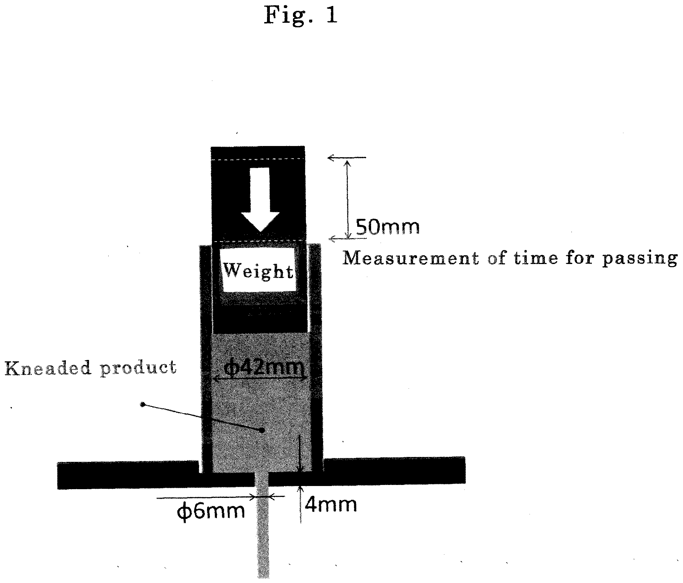

The foamed and kneaded product is charged into an apparatus for measuring kinetic viscosity as shown in Fig. 1.

### Procedure 4

As shown in Fig. 1, a weight of 1kg is mounted on the foamed and kneaded product, and a kinetic viscosity is measured as a time for the weight to pass each of standard lines at an interval of 50mm while the foamed and kneaded product is discharged through a hole at lower side having ϕ of 6mm and the weight is moved downwardly.

The rapid-foaming property is evaluated according to the following evaluation standard.
○○: Measured time is shorter than 1.80 seconds.
○: Measured time is 2.20 seconds or shorter and longer than 1.80 seconds.
×: Measured time is longer than 2.20 seconds.

### (2) Strength of mold

The flexural strength of the mold containing the foamed sand is measured.

### Procedure 1

Artificial sand is prepared as articulate bone material, water glass and the surfactant for the evaluation are prepared as water soluble binders, and water is prepared. The materials are charged into a kneading system in weight ratios of 100 of the artificial sand, 0.5 to 2.5 of the solid content of the water glass, 0.01 to 0.05 of the effective ingredient of the surfactant and 2 to 4 of water.

### Procedure 2

The materials were kneaded by means of the kneading system for 120 seconds to obtain foamed mixture.

### Procedure 3

The foamed mixture produced as described above is charged into a metal mold for molding by means of a system for molding a test piece for measuring the strength.

The test piece for molding (10mm×30mm×85mm) is sintered in a molding metal mold at 200 to 300°C for 30 to 120 seconds and thus molded.

### Procedure 4

The thus molded and drawn test piece of the mold is cooled to room temperature.

### Procedure 5

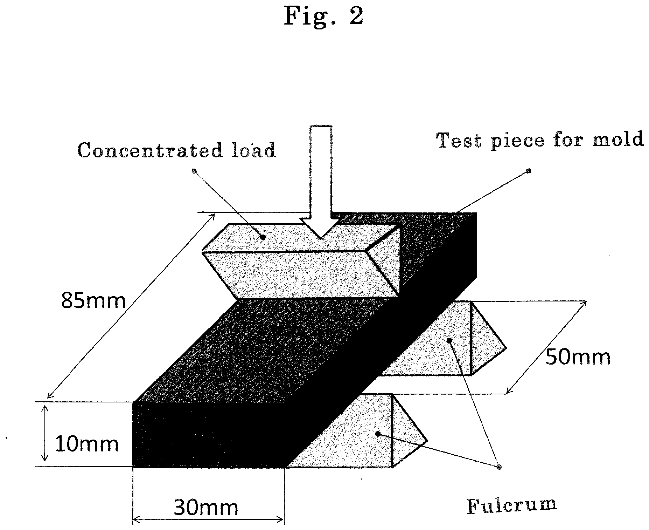

As shown in Fig. 2, the test piece is set in the apparatus for testing the flexural strength for mold and the flexural strength of the test piece is measured to obtain the strength of the mold. The unit of the strength of the mold is kg/cm².

The strength of the mold is evaluated according to the following evaluation standard.
○○: The strength of the mold is 25kg/cm² or higher.
○: The strength of the mold is 20kg/cm² or higher and below 25kg/cm².
×: The strength of the mold is below 20kg/cm².

**Table 1**

| | R¹ | Number of carbon atoms of R¹ | a | M¹ |
|---|---|---|---|---|
| A1 | Lauryl group and myristyl group (68:32) 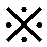 1 | 12, 14 | 3 | Sodium |
| A2 | Lauryl group | 12 | 4 | Sodium |

| | | | | |
|---|---|---|---|---|
| A1: "PERSOFT EF" (manufactured by NOF Corporation) A2: "Trucks K-40" (manufactured by NOF Corporation) 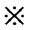 1: Numeral in the parenthesis represent mass ratios of components having the respective alkyl groups | | | | |

**Table 2**

| | Fatty acyl group | Number of carbon atoms of R² | R³ | M² |
|---|---|---|---|---|
| B1 | Capryloyl group | 9 | Methyl group | Sodium |
| B2 | Residual group of coconut oil fatty acid 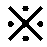 1 | 5 to 19 | Methyl group | sodium |

| | | | | |
|---|---|---|---|---|
| B1: "DIAPON HF-SF" (manufactured by NOF Corporation) B2: "DIAPON K" (manufactured by NOF Corporation) 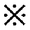 1: As to the information of composition, please refer to "Standard Tables of Food Composition in Japan, the year 2015 version (Seventh edition), Edition of Tables of fatty acid compositions, Chapter 2, Table 2, "Tables of fatty acid compositions per 100g of total amount of fatty acids (Tables of fatty acid compositions), 14, oils and fats" | | | | |

**Table 3**

| | R⁴ | Molecular weight | AO | b |
|---|---|---|---|---|
| C1 | Hydrogen atom | 4000 | EO | 89 |
| C2 | Butyl group | 2000 | EO/PO | 44 |

| | | | | |
|---|---|---|---|---|
| C1: Water soluble polyalkylene glycol derivative (Weight average molecular weight: about 4000) C2: Water soluble polyalkylene glycol derivative (Weight average molecular weight: about 2000) | | | | |

**Table 4**

| | | | inventive Examples | | | | | |
|---|---|---|---|---|---|---|---|---|
| | | | 1 | 2 | 3 | 4 | 5 | 6 |
| Component (A) (mass%) | | A1 | 31 | 44 | 44 | 34 | 75 | - |
| | | A2 | - | - | - | - | - | 40 |
| Component (B) (mass%) | | B1 | 69 | 56 | 56 | 66 | 25 | 60 |
| | | B2 | - | - | - | - | - | - |
| Total of component (A) and component (B) (mass%) | | | 100 | 100 | 100 | 100 | 100 | 100 |
| Component (C) (mass parts) | | C1 | - | - | 19 | - | - | - |
| | | C2 | - | - | - | 10 | 25 | - |
| Other components (mass parts) | | D1 | - | - | - | - | - | - |
| | | D2 | - | - | - | - | - | - |
| | | D3 | - | - | - | - | - | - |
| | | D4 | - | - | - | - | - | - |
| Evaluation results | (1) Rapid-foaming property (Kneaded for 90 seconds) | | ○ ○ (1.68) | ○ ○ (1.50) | ○ (1.90) | ○ ○ (1.62) | ○ ○ (1.55) | ○ ○ (1.74) |
| | (2) Strength of mold (Kneaded for 120 seconds) | | ○ (22.9) | ○ (20.2) | ○ ○ (25.4) | ○ ○ (27.6) | ○ ○ (27.0) | ○ (20.1) |

**Table 4 (continued)**

| | | inventive Examples | | | | |
|---|---|---|---|---|---|---|
| | | 7 | 8 | 9 | 10 | 11 |
| Component (A) (mass%) | A1 | 40 | 41 | 44 | 61 | 68 |
| | A2 | - | - | - | - | - |
| Component (B) (mass%) | B1 | - | 59 | 56 | 39 | 32 |
| | B2 | 60 | - | - | - | - |
| Total of component (A) and component (B) (mass%) | | 100 | 100 | 100 | 100 | 100 |
| Component (C) (mass parts) | C1 | - | - | - | - | - |
| | C2 | - | - | - | - | - |
| Other components (mass parts) | D1 | - | 6 | - | - | - |
| | D2 | - | - | 6 | - | - |
| | D3 | - | - | - | 1 | - |
| | D4 | - | - | - | - | 6 |
| Evaluation results | (1) Rapid-foaming property (Kneaded for 90 seconds) | ○ (2.20) | ○ ○ (1.72) | ○ (2.06) | ○ (2.10) | ○ (2.13) |
| | (2) Strength of mold (Kneaded for 120 seconds) | ○ ○ (26.0) | ○ ○ (26.2) | ○ ○ (26.1) | ○ (24.8) | ○ ○ (26.2) |

**Table 5**

| | | Comparative Examples | | | | | |
|---|---|---|---|---|---|---|---|
| | | 1 | 2 | 3 | 4 | 5 | 6 |
| Component (A) (mass%) | A1 | 100 | - | 10 | 90 | 100 | 11 |
| Component (B) (mass%) | B1 | - | 100 | 90 | 10 | - | 89 |
| Total of component (A) and component (B) (mass%) | | 100 | 100 | 100 | 100 | 100 | 100 |
| Component (C) (mass%) | C1 | - | - | - | - | 25 | 11 |
| Evaluation results | (1) Rapid-foaming property (Kneaded for 90 seconds) | × (2.28) | ○ (1.96) | ○ (1.94) | × (2.22) | × (2.33) | ○ (1.94) |
| | (2) Strength of mold (Kneaded for 120 seconds) | ○ (24.5) | × (17.8) | × (18.2) | ○ (21.6) | × (19.4) | × (19.8) |

D1: "PERSOFT SK" (manufactured by NOF Corporation)
D2: "Nissan Anon BDL-SF" (manufactured by NOF Corporation)
D3: "NAA-43" (manufactured by NOF Corporation)
D4: "NONSOUL LK-2" (manufactured by NOF Corporation)

According to the surfactant compositions for foamed sand of the inventive examples 1 to 11 of the present invention, as the component (A), component (B) and component (C) are contained in specific ratios, the rapid-foaming property of the foamed sand was excellent and the strength of the mold was good.

According to the comparative example 1, as the component (B) and component (C) were not contained, the rapid-foaming property was low.

According to the comparative example 2, as the component (A) and component (C) were not contained, the strength of the mold was low.

According to the comparative example 3, as the content of the component (A) was low and the content of the component (B) was high, the strength of the mold was proved to be low.

According to the comparative example 4, as the content of the component (A) is high and content of the component (B) was low, the rapid-foaming property was low.

According to the comparative example 5, as the component (B) was not contained, the rapid-foaming property and strength of the mold were low.

According to the comparative example 6, as the content of the component (A) was low and content of the component (B) was high, the strength of the mold was low.

## Claims

1. A surfactant composition for a formed sand, said surfactant composition comprising a compound (A) represented by the following formula (1) and a compound (B) represented by the following formula (2),
wherein a content of said compound (A) is 25 to 85 mass% and a content of said compound (B) is 15 to 75 mass%, provided that a total mass of said compound (A) and said compound (B) is defined as 100 mass%.
R¹O-(EO)ₐ-SO₃M¹··· (1)
(in the formula (1),
R¹ represents a hydrocarbon group having 6 to 22 carbon atoms,
EO represents oxyethylene group,
a represents an average molar number of addition of said oxyethylene group and 1 to 10, and
M¹ represents an alkali metal, alkaline earth metal, ammonium or an organic ammonium.)
R²CONR³C₂H₄SO₃M²··· (2)
(in the formula (2),
R²CO represents a fatty acyl group having 6 to 22 carbon atoms,
R³ represents hydrogen atom or an alkyl group having 1 to 3 carbon atoms, and
M² represents an alkali metal, an alkaline earth metal, ammonium or an organic ammonium.)

2. The surfactant composition for a formed sand of claim 1, said surfactant composition further comprising a compound (C) represented by the following formula (3), wherein a content of said compound (C) is 1 to 20 mass parts provided that a total mass of said compound (A) and said compound (B) is defined as 100 mass parts.
R⁴O-(AO)_{b}-H··· (3)
(in the formula (3),
R⁴ represents hydrogen atom or a hydrocarbon group having 1 to 5 carbon atoms,
AO represents an oxyalkylene group having 2 or more and 3 or less carbon atoms, and
b represents an average molar number of addition of said oxyalkylene group and 2 to 100.)
